# EUROPEAN PATENT APPLICATION

(11) **EP 4 325 952 A1**
(43) Date of publication of application: **21.02.2024**
(21) Application number: 21937297.6
(22) Date of filing: 20.04.2021
(51) Int. Cl.: H04W 60/04, H04W 4/06

(54) **SYSTEM BROADCAST MESSAGE UPDATING METHOD, APPARATUS AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Ipside
(86) International application number: PCT/CN2021/088541
(87) International publication number: WO 2022/222052

(57) **Abstract**

A method and apparatus for system broadcast message update, a device, and a storage medium are provided. A network device configures reception-condition configuration information for a terminal device. If the terminal device detects that a system broadcast message is updated or if the terminal device receives a portion of the updated system broadcast message, the terminal device determines, according to the reception-condition configuration information, whether the terminal device satisfies a condition in the reception-condition configuration information. If the condition is satisfied, the terminal device will receive a corresponding updated system broadcast message or receive the remaining portion of the corresponding updated system broadcast message. If the condition is not satisfied, the terminal device will drop receiving the corresponding updated system broadcast message or drop receiving the remaining portion of the corresponding updated system broadcast message, which can avoid unnecessary reception of the updated system broadcast message by all the terminal devices, thereby improving user experience and on the other hand, reducing power consumption of the terminal device that does not need to receive the corresponding updated system broadcast message.

## Description

### TECHNICAL FIELD

Implementations of the disclosure relate to communication technology, and more particularly to a method and apparatus for system broadcast message update, a device, and a storage medium.

### BACKGROUND

Currently, with people's pursuit of speed, low delay, high-speed mobility, and energy efficiency, as well as diversity and complexity of services in future life, the 3^{rd} generation partnership project (3GPP) international standard organization began to research and develop the fifth generation (5G) mobile communication. 5G is mainly applied to enhanced mobile broadband (eMBB), ultra-reliable low-latency communication (URLLC), and massive machine-type communication (mMTC). eMBB still aims to enable users to obtain multimedia contents, service, and data and grows rapidly in demands. eMBB may be deployed in various scenarios, such as indoor, urban, rural, etc.

In an application, a terminal device may determine whether a system broadcast message is updated by detecting a system information update indication carried in paging downlink control information (DCI), so as to acquire the latest broadcast message. The system broadcast message is divided into a master information block (MIB), a system information block type 1 (SIB1), and other SIBs. The MIB appears together with a cell-specific synchronization signal/physical broadcast channel block (SS/PBCH block, SSB), and the MIB is scheduled according to a period of the cell-specific SSB. Time-domain scheduling information for the SIB 1 is determined based on a search space configuration corresponding to a physical downlink control channel (PDCCH) associated with the SIB 1, and for any one of the other SIBs, time-domain scheduling information of the SIB is determined based on search space configurations corresponding to PDCCHs associated with the other SIBs and system information (SI) configuration information corresponding to the SIB in an SIB1 configuration.

In an existing new radio (NR) system, a system broadcast message update notification of a cell is intended for all terminal devices within the coverage of the cell. However, with regard to a satellite communication system, the coverage range of a satellite cell is much larger than that of a terrestrial cell, and one satellite cell may even cover multiple countries or regions. In this case, for warning information such as SIB6/7/8, terminal devices in some regions do not need to receive an update notification for SIB6/7/8 because contents of SIB6/7/8 usually have strong regional characteristics. For a satellite cell, different terminal devices may be located in different countries, and it is unnecessary for some of the terminal devices within the coverage of the satellite cell to receive warning information sent by a country. For the terminal device, unnecessary information reception will lead to increase in power consumption.

### SUMMARY

Embodiments of the disclosure provide a method and apparatus for system broadcast message update, a device, and a storage medium, which can solve the problem in the related art that all terminal devices within the coverage of a cell receive an updated system broadcast message and thus results in power consumption of some terminal devices that do not need to receive the updated system broadcast message.

In a first aspect, a method for system broadcast message update is provided in an embodiment of the disclosure. The method is applied to a terminal device. The method includes the following. Determine whether the terminal device satisfies a condition in reception-condition configuration information, where the reception-condition configuration information is pre-configured information used for the terminal device to determine whether to receive a corresponding updated system broadcast message. Receive the corresponding updated system broadcast message if the terminal device determines that the terminal device satisfies the condition in the reception-condition configuration information.

In a second aspect, a method for system broadcast message update is provided in an embodiment of the disclosure. The method is applied to a network device. The method includes the following. Send reception-condition configuration information to a terminal device via a system broadcast message or dedicated signaling, where the reception-condition configuration information is used for the terminal device to determine whether to receive an updated system broadcast message.

In a third aspect, an apparatus for system broadcast message update is provided in an embodiment of the disclosure. The apparatus includes a processing module and a receiving module. The processing module is configured to determine whether the apparatus satisfies a condition in reception-condition configuration information, where the reception-condition configuration information is pre-configured information used for the apparatus to determine whether to receive a corresponding updated system broadcast message. The receiving module is configured to receive the corresponding updated system broadcast message if the apparatus determines that the apparatus satisfies the condition in the reception-condition configuration information.

In a fourth aspect, an apparatus for system broadcast message update is provided in an embodiment of the disclosure. The apparatus includes a transmitting module. The transmitting module 22 is configured to send reception-condition configuration information to a terminal device via a system broadcast message or dedicated signaling, where the reception-condition configuration information is used for the terminal device to determine whether to receive an updated system broadcast message.

In a fifth aspect, a terminal device is provided in an embodiment of the disclosure. The terminal device includes a processor, a memory, a receiver, and a transmitter. The memory is configured to store computer-executable instructions. The processor is configured to execute the computer-executable instructions stored in the memory, to implement the method described in the first aspect.

In a sixth aspect, a network device is provided in an embodiment of the disclosure. The network device includes a processor, a memory, and a transmitter. The memory is configured to store computer-executable instructions. The processor is configured to execute the computer-executable instructions stored in the memory, to implement the method described in the second aspect.

In a seventh aspect, a computer-readable storage medium is provided in an embodiment of the disclosure. The computer-readable storage medium is configured to store computer-executable instructions which, when executed by a processor, are operable with the processor to implement the method described in the first aspect.

In an eighth aspect, a computer-readable storage medium is provided in an embodiment of the disclosure. The computer-readable storage medium is configured to store computer-executable instructions which, when executed by a processor, are operable with the processor to implement the method described in the second aspect.

In a ninth aspect, a chip is provided in an embodiment of the disclosure. The chip includes a processing module and a communication interface. The processing module is configured to implement the method described in the first aspect.

In a tenth aspect, a chip is provided in an embodiment of the disclosure. The chip includes a processing module and a communication interface. The processing module is configured to implement the method described in the second aspect.

In an eleventh aspect, a computer program product is provided in an embodiment of the disclosure. The computer program product includes computer programs which, when executed by a processor, are operable with the processor to implement the method described in the first aspect.

In a twelfth aspect, a computer program product is provided in an embodiment of the disclosure. The computer program product includes computer programs which, when executed by a processor, are operable with the processor to implement the method described in the second aspect.

According to the method and apparatus for system broadcast message update, the device, and the storage medium provided in embodiments of the disclosure, the network device configures the reception-condition configuration information for the terminal device. If the terminal device detects that the system broadcast message is updated or if the terminal device receives a portion of the updated system broadcast message, the terminal device determines, according to the reception-condition configuration information, whether the terminal device satisfies the condition in the reception-condition configuration information. If the condition is satisfied, the terminal device will receive the corresponding updated system broadcast message or receive the remaining portion of the corresponding updated system broadcast message. If the condition is not satisfied, the terminal device will drop receiving the corresponding updated system broadcast message or drop receiving the remaining portion of the corresponding updated system broadcast message, which can avoid unnecessary reception of the updated system broadcast message by all the terminal devices, thereby reducing power consumption of the terminal device that does not need to receive the updated system broadcast message.

### BRIEF DESCRIPTION OF THE DRAWINGS

In order to describe more clearly technical solutions of implementations of the disclosure or the related art, the following will give a brief introduction to the accompanying drawings used for describing the implementations or the related art. Apparently, the accompanying drawings described below are merely some implementations of the disclosure. Based on these drawings, those of ordinary skill in the art can also obtain other drawings without creative effort.
FIG. 1 is a schematic diagram illustrating an application scenario of a method for system broadcast message update provided in the disclosure.
FIG. 2 is a flowchart illustrating embodiment I of a method for system broadcast message update provided in the disclosure.
FIG. 3 is a flowchart illustrating embodiment II of a method for system broadcast message update provided in the disclosure.
FIG. 4 is a schematic structural diagram illustrating embodiment I of an apparatus for system broadcast message update provided in the disclosure.
FIG. 5 is a schematic structural diagram illustrating embodiment II of an apparatus for system broadcast message update provided in the disclosure.
FIG. 6 is a schematic structural diagram illustrating embodiment III of an apparatus for system broadcast message update provided in the disclosure.
FIG. 7 is a schematic structural diagram of a terminal device provided in the disclosure.
FIG. 8 is a schematic structural diagram of a network device provided in the disclosure.

### DETAILED DESCRIPTION

In order to make purposes, technical solutions, and advantages of the disclosure clearer, technical solutions of implementations of the disclosure will be described clearly and completely below with reference to the accompanying drawings of the implementations of the disclosure. Apparently, implementations described herein are merely some implementations, rather than all implementations, of the disclosure. Based on the implementations of the disclosure, all other implementations obtained by those of ordinary skill in the art without creative effort shall fall within the protection scope of the disclosure.

It should be noted that, the terms "first", "second", and the like used in the specification of implementations and claims of the disclosure and the above accompanying drawings are used to distinguish similar objects, and are not necessarily used to describe a particular sequence or order. It should be understood that, the terms thus used may be interchangeable where appropriate, so that the implementations of the disclosure described herein, for example, can be implemented in a sequences other than those illustrated or described herein. In addition, the terms "include", "comprise", and "have" as well as variations thereof are intended to cover non-exclusive inclusion. For example, a process, method, system, product, or device including a series of steps or units is not limited to the listed steps or units, and instead, it can optionally include other steps or units that are not listed or other steps or units inherent to the process, method, product, or device.

In a common application scenario of 5^{th} generation (5G) mobile communication, enhanced mobile broadband (eMBB) still aims to enable users to obtain multimedia content, services, and data and grows rapidly in demands. On the other hand, because eMBB may be deployed in different scenarios, such as indoor, urban, rural, etc., its capabilities and requirements vary widely, and it is necessary to analyze in combination with specific deployment scenarios. Ultra-reliable low-latency communication (URLLC) is typically applied to industrial automation, power automation, telemedicine operations, and traffic safety assurance, etc. Massive machine-type communication (mMTC) is typically characterized by high connection density, small amount of data, delay-insensitive services, low cost of modules, and long service life, etc.

In a 5G network environment, a new radio resource control (RRC) state, namely an RRC_INACTIVE state, is defined in order to reduce air interface signaling, achieve fast radio connection recovery, and achieve fast data service recovery. This state is different from an RRC_IDLE state and an RRC_CONNECTED state. The following will give an introduction to these states by exemplarily taking a user equipment (UE) as a user-side device and taking a base station as a network device.

RRC_IDLE state: Mobility is based on cell selection and re-selection of the UE. Paging is initiated by a core network (CN), and a paging area is configured by the CN. A basestation side has no UE access stratum (AS) context or RRC connection.

RRC_CONNECTED state: There is an RRC connection. Both the base station and the UE have UE AS context. A network side knows that a location of the UE is cell level-based. Mobility is controlled by the network side. Unicast data can be transferred between the UE and the base station.

RRC_INACTIVE state: Mobility is based on cell selection and re-selection of the UE. There is a CN-next-generation radio access network (NG-RAN) connection. Some base station has UE AS context. Paging is triggered by a RAN, a RAN-based paging area is managed by the RAN, and the network side knows that the location of the UE is RAN-based paging area level.

Introduction to scheduling of a system broadcast message:
The system broadcast message is divided into a master information block (MIB), a system information block type 1 (SIB 1), and other SIBs. The MIB appears together with a cell-specific synchronization signal/physical broadcast channel block (SS/PBCH block, SSB), and the MIB is scheduled according to a period of the cell-specific SSB. Time-domain scheduling information for the SIB 1 is determined based on a search space configuration corresponding to a physical downlink control channel (PDCCH) associated with the SIB 1, and for any one of the other SIBs, time-domain scheduling information of the SIB is determined based on search space configurations corresponding to PDCCHs associated with the other SIBs and system information (SI) configuration information corresponding to the SIB in an SIB 1 configuration.

System broadcast message update mechanism: A terminal device determines whether a system broadcast message of a cell is updated by detecting a system information update indicator bit and/or a warning information indicator bit carried in paging downlink control information (DCI). Once the paging DCI notifies that the system information is updated, the terminal device needs to immediately read the latest SIB 1 of the cell, then determine, according to value tags of other SIBs configured in the SIB 1, which system information is updated, and receive the updated information in the other SIBs according to scheduling configurations of the other SIBs configured in the SIB1. It should be specially noted that, in a new radio (NR) system, SIB6, SIB7, and SIB8 each do not have an associated value tag configuration. Once the paging DCI indicates that warning information is changed, a terminal device having a warninginformation receiving capability needs to receive the updated warning information according to scheduling information of SIB6, SIB7, and SIB8 in the latest SIB1.

Brief introduction to a satellite cell:
A satellite may be classified into a geostationary earth orbiting (GEO) satellite, a medium earth orbiting (MEO) satellite, and a low earth orbiting (LEO) satellite. GEO coverage may be up to thousands of kilometers in diameter (usually 3 satellites cover the globe) and may be stationary relative to the ground. MEO coverage/LEO coverage varies from tens of kilometers to thousands of kilometers in diameter depending on orbital altitudes. However, a terrestrial cell usually has a coverage of hundreds of meters to thousands of meters in diameter. The coverage of a satellite cell is much larger than that of a terrestrial cell.

Since the impact of air resistance on movement of the satellite is a long-term impact (orbit change per day is very small), the running orbit of the satellite can be considered to remain nearly unchanged in a short time period, in other words, orbits of all satellites are predictable in a short time period. Orbit information of the satellite is generally referred to as an ephemeris.

Based on the foregoing related art, in an existing NR system, a system broadcast message update notification of a cell is intended for all terminal devices within the coverage of the cell. However, with regard to a satellite communication system, the coverage range of a satellite cell is much larger than that of a terrestrial cell, and one satellite cell may even cover multiple countries or regions. In this case, for warning information such as SIB6/7/8, terminal devices in some regions do not need to receive an update notification for SIB6/7/8 because contents of SIB6/7/8 usually have strong regional characteristics. For a terrestrial cell, since the coverage of the cell is small (usually hundreds of meters in radius), it is infrequent for the cell to span multiple countries or regions, and accordingly, it is reasonable to require all terminal devices in the cell to receive updated warning information. However, for a satellite cell, different terminal devices may be located in different countries, and it is unnecessary for some of the terminal devices within the coverage of the satellite cell to receive warning information sent by a country, and on the other hand, unnecessary information reception is not beneficial to power saving of the terminal device and leads to increase in power consumption of the terminal device.

In view of the problems described above, the disclosure provides a method for system broadcast message update. A terminal device can determine whether to receive an updated system broadcast message after detecting that the system broadcast message is updated, or determine whether to receive the remaining portion of the updated system broadcast message after receiving a portion of the updated system broadcast message, so as to avoid unnecessary reception, which can reduce power consumption of the terminal device, thereby improving user experience.

The conception of the solution: when the inventor studying the transmission of a system broadcast message and the mechanism for system broadcast message update, the inventor found that in an existing mode, a terminal device receives a corresponding updated system broadcast message according to a value tag associated with each SIB and scheduling configuration information associated with each SIB contained in SIB 1 after detecting that the system broadcast message is updated, and/or the terminal device receives corresponding updated warning information according to scheduling configuration information associated with the warning information contained in the SIB 1 after detecting that the warning information is updated, but the terminal device does not make any judgment before receiving the updated system broadcast message and/or the updated warning information, nor does the terminal device determine, according to requirements of the terminal device, whether to receive the updated system broadcast message. To this end, the inventor considers that a terminal-device side can make a judgement on whether to receive the updated system broadcast message, and determine, according to the judgement result, to receive or to drop receiving the updated system broadcast message, thereby avoiding increase in power consumption of the terminal device that is caused by unnecessary reception of all the updated system broadcast messages.

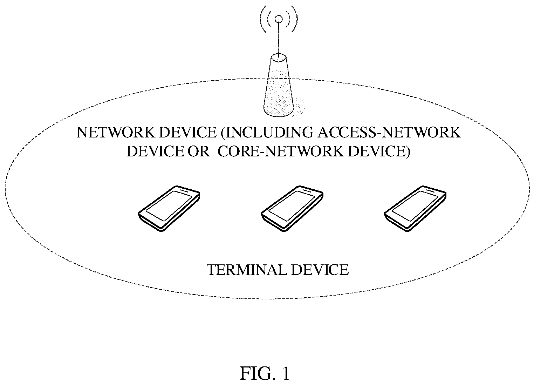

FIG. 1 is a schematic diagram illustrating an application scenario of a method for system broadcast message update provided in the disclosure. As illustrated in FIG. 1, the solution is mainly applied to any terminal device. A network device may be configured to send a system broadcast message, or configure reception-condition configuration information for the terminal device, or indicate to the terminal device whether to determine, based on the reception-condition configuration information, whether to receive an updated system broadcast message.

Specifically, the solution may involve two execution entities, namely the network device and the terminal device. The network device is a device for communicating with the terminal device (also referred to as communication terminal or terminal) such as a UE, and may be an access-network device or a core-network device.

The network device can provide communication coverage for a particular geographic region and communicate with terminal devices within the coverage area. Optionally, the network device may be a base transceiver station (BTS) in a global system for mobile communication (GSM) or a code division multiple access (CDMA) system, or may be a NodeB (NB) in a wideband code division multiple access (WCDMA) system, or may be an evolutional Node B (eNB or eNodeB) in a long term evolution (LTE) system, or a radio controller in a cloud radio access network (CRAN); or the network device may be a mobile switching center, a relay station, an access point, an in-vehicle device, a wearable device, a hub, a switch, a bridge, a router, a network-side device in a 5G network, a network device in a future evolved public land mobile network (PLMN), or a base station providing satellite services, etc.

The terminal device includes, but is not limited to, a device configured to communicate via a wired line, another data connection/network, and/or a wireless interface, a device which is part of another terminal device and configured to receive/transmit communication signals, or an Internet of things (IoT) device. Examples of the wired line may include, but are not limited to, a public switched telephone network (PSTN), a digital subscriber line (DSL), a digital cable, a direct connection cable. Examples of the wireless interface may include, but are not limited to, a wireless interface for a cellular network, a wireless local area network (WLAN), a digital television network (such as a digital video broadcasting-handheld (DVB-H) network), a satellite network, an amplitude modulation-frequency modulation (AM-FM) broadcast transmitter. A terminal device configured to communicate via a wireless interface may be called a "wireless communication terminal", a "wireless terminal", or a "mobile terminal". Examples of a mobile terminal may include, but are not limited to, a satellite telephone or cellular telephone, a personal communication system (PCS) terminal integrated with functions of cellular radio telephone, data processing, fax, and data communication, a personal digital assistant (PDA) equipped with radio telephone, pager, Internet/Intranet access, web browsing, notebook, calendar, and/or global positioning system (GPS) receiver, and a conventional laptop, a handheld receiver, or other electronic devices equipped with radio telephone receiver. The terminal device may refer to an access terminal, a subscriber unit, a subscriber station, a mobile station, a remote station, a remote terminal, a mobile device, a user terminal, a terminal, a wireless communication device, a user agent, or a user device. The access terminal may be a cellular radio telephone, a cordless telephone, a session initiation protocol (SIP) telephone, a wireless local loop (WLL) station, a PDA, a handheld device with wireless communication functions, a computing device, other processing devices coupled with a wireless modem, an in-vehicle device, a wearable device, a terminal device in the 5G network, a terminal device in the future evolved PLMN, etc.

Based on the scenario illustrated in FIG. 1, the method for system broadcast message update provided in the disclosure will be described in detail below with reference to some embodiments.

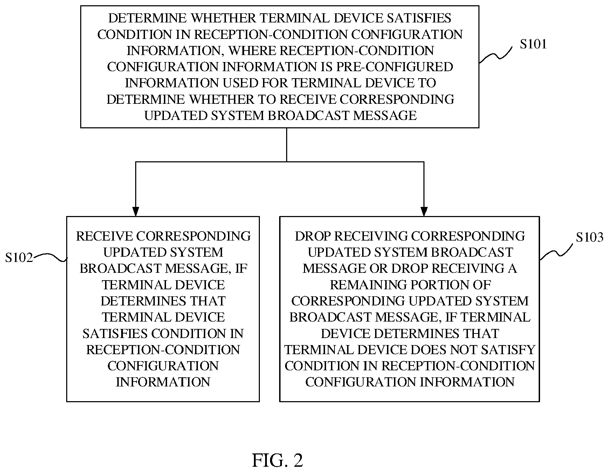

FIG. 2 is a flowchart illustrating embodiment I of a method for system broadcast message update provided in the disclosure. As illustrated in FIG. 2, the method specifically includes the following.

S 101, determine whether a terminal device satisfies a condition in reception-condition configuration information, where the reception-condition configuration information is pre-configured information used for the terminal device to determine whether to receive a corresponding updated system broadcast message.

In this step, a network device configures the reception-condition configuration information for the terminal device, where the reception-condition configuration information is used for the terminal device to determine whether to receive a system broadcast message after detecting that the system broadcast message is updated or after receiving a portion of the updated system broadcast message.

The reception-condition configuration information may be configured by the network device, and may specifically be configured via a system broadcast message or dedicated signaling, and the solution is not limited in this regard.

The reception-condition configuration information may include at least one of: logic identity (ID) configuration information, where the logic ID configuration information includes at least one logic ID; bit field configuration information, where the bit field configuration information has at least one bit; or geographic coordinate range configuration information.

One or more of these pieces of information are used for determining a specific reception condition. After detecting that a system broadcast message is updated or after receiving a portion of an updated system broadcast message, the terminal device determines whether the terminal device satisfies a corresponding reception condition, so as to determine subsequent reception behavior.

In an implementation of the solution, the terminal device may perform the step at least in the following two modes.

In a first mode, if the terminal device detects, according to DCI or a paging message sent by the network device, that a system broadcast message and/or warning information is updated, the terminal device determines whether the terminal device satisfies the condition in the reception-condition configuration information.

That is, after detecting that the system broadcast message and/or the warning information is updated, the terminal device firstly determines whether the terminal device satisfies the reception condition, and then determines whether to receive the updated system broadcast message.

In a second mode, the terminal device receives a portion of an updated system broadcast message, and determines, according to the received portion of the system broadcast message, whether the terminal device satisfies the condition in the reception-condition configuration information.

That is, some system broadcast messages are divided into multiple segments for transmission. After detecting that a system broadcast message is updated and receiving a portion of the updated system broadcast message, the terminal device determines, according to the portion received, whether to receive the remaining portion of the updated system broadcast message. In this mode, whether the terminal device satisfies the reception condition is determined in receiving the updated system broadcast message.

S102, receive the corresponding updated system broadcast message if the terminal device determines that the terminal device satisfies the condition in the reception-condition configuration information.

In this step, after determining that the reception condition is satisfied, the terminal device can receive the corresponding updated system broadcast message, that is, determination to receive the current update is based on the reception condition. When receiving the corresponding updated system broadcast message, the corresponding updated system broadcast message is received according to scheduling configuration information.

The updated system broadcast message may be a common system broadcast message except SIB6, SIB7, or SIB8, or may be warning information (for example, SIB6, SIB7, or SIB8).

S103, drop receiving the corresponding updated system broadcast message or drop receiving a remaining portion of the corresponding updated system broadcast message, if the terminal device determines that the terminal device does not satisfy the condition in the reception-condition configuration information.

In this step, if the terminal device does not satisfy the reception condition, that is, the terminal device does not need to receive the corresponding updated system broadcast message or does not need to receive the remaining portion of the corresponding updated system broadcast message, the terminal device will terminate receiving the corresponding updated system broadcast information, i. e. directly drop receiving the corresponding updated system broadcast message or drop receiving the remaining portion of the corresponding updated system broadcast message.

According to the method provided in the embodiment, the network device configures the reception-condition configuration information for the terminal device. If the terminal device detects that the system broadcast message is updated or if the terminal device receives a portion of the updated system broadcast message, the terminal device determines, according to the reception-condition configuration information, whether the terminal device satisfies the condition in the reception-condition configuration information. If the condition is satisfied, the terminal device will receive the corresponding updated system broadcast message or receive the remaining portion of the corresponding updated system broadcast message. If the condition is not satisfied, the terminal device will drop receiving the corresponding updated system broadcast message or drop receiving the remaining portion of the corresponding updated system broadcast message, which can avoid unnecessary reception of all the updated system broadcast messages by all the terminal devices, thereby improving user experience and on the other hand, reducing power consumption of the terminal device that does not need to receive the updated system broadcast message.

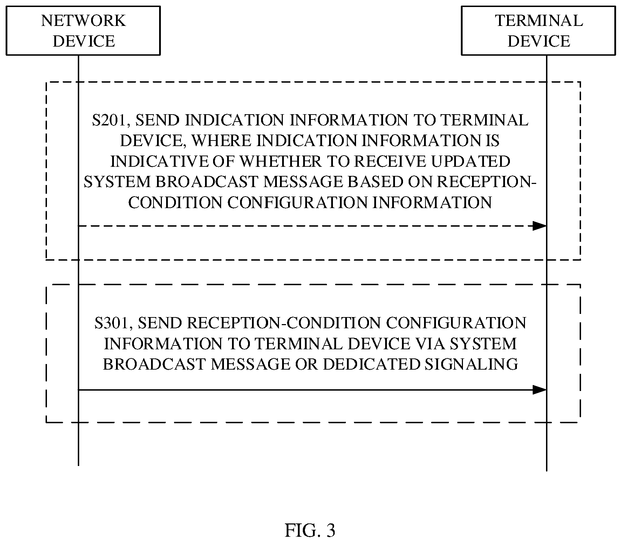

FIG. 3 is a flowchart illustrating embodiment II of a method for system broadcast message update provided in the disclosure. As illustrated in FIG. 3, based on the foregoing embodiment, before performing the foregoing operations, in an application of the method, the terminal device may determine, based on the reception-condition configuration information by default, whether to receive the system broadcast message, or may determine, according to an indication of the network device or the capability of the terminal device, whether to determine based on the reception-condition configuration information whether to receive the corresponding updated system broadcast message. Therefore, optionally, in an implementation, the terminal device firstly needs to determine whether to receive the updated system broadcast message based on the reception-condition configuration information.

Specifically, this may be implemented at least in the following modes.

A first mode: It is a mode specified in a protocol. If the reception-condition configuration information is configured for the terminal device, the terminal device will determine, based on the reception-condition configuration information, whether to receive the updated system broadcast message; otherwise, if no reception-condition configuration information is configured for the terminal device, the terminal device will receive the corresponding updated system broadcast message according to scheduling information directly.

In a second mode, the terminal device determines, according to capability information of the terminal device, whether to receive the updated system broadcast message based on the reception-condition configuration information, where the capability information is indicative of whether the terminal device supports receiving the updated system broadcast message based on the reception-condition configuration information. For example, the capability information may be pre-configured or specified in a protocol.

In a third mode, the terminal device determines, according to an indication of the network device, whether to receive the updated system broadcast message based on the reception condition configuration information, which specifically includes the following.

S201, send indication information to the terminal device, where the indication information is indicative of whether the terminal device is to receive the corresponding updated system broadcast message based on the reception-condition configuration information whether to.

Step S201 is an optional step, and is represented by dotted lines.

In this step, the network device sends the indication information to the terminal device, and the terminal device determines, according to the indication information sent by the network device, whether to receive the corresponding updated system broadcast message based on the reception-condition configuration information.

In an implementation, the network device may send the indication information via at least one of: dedicated signaling, a system broadcast message, non-access stratum (NAS) configuration, DCI, a media access control-control element (MAC CE), a paging short message, a paging message, etc., and the manner of sending the indication information to the terminal device each time may be the same or different.

If the indication information indicates not to receive based on the reception-condition configuration information, even though the reception-condition configuration information is configured, the terminal device will receive the corresponding updated system broadcast message in a default mode. If the indication information indicates to receive based on the reception-condition configuration information, there are two cases: if the reception-condition configuration information is configured for the terminal device, the terminal device will determine, according to the reception condition in the reception-condition configuration information, whether to receive the corresponding updated system broadcast message; otherwise, if no reception-condition configuration information is configured for the terminal device, the terminal device will receive the corresponding updated system broadcast message in the default mode.

The default mode above is specifically as follows: if the terminal device detects, according to DCI or a paging message received from the network device, that a system broadcast message and/or warning information is updated, the terminal device will receive a corresponding updated system broadcast message according to a value tag associated with each SIB and scheduling configuration information associated with each SIB contained in SIB1, and/or receive corresponding updated warning information according to scheduling configuration information associated with the warning information contained in SIB 1.

On the basis of any one of the foregoing implementations, the network device may configure the reception-condition configuration information for the terminal device through the following steps.

S301, send the reception-condition configuration information to the terminal device via a system broadcast message or dedicated signaling.

In this step, the network device may configure the reception-condition configuration information for the terminal device via the system broadcast message or the dedicated signaling when communicating with the terminal device, where the reception-condition configuration information is used for the terminal device to determine whether to receive the corresponding updated system broadcast message.

The reception-condition configuration is configured at the following at least one granularities (hereinafter, "configuration granularity for the reception-condition configuration" for short): a cell granularity, an SIB granularity, an SIB set granularity, an SI granularity, or an SI set granularity.

The network device may configure a reception condition at one granularity at one time for the terminal device, or may configure a reception condition at a different granularity each time for the terminal device, or may configure a reception condition at two or more than two configuration granularities at one time for the terminal device, and the solution is not limited in this regard.

Based on the contents described in the foregoing embodiments, it can be seen that in the method provided in the disclosure, the network device can pre-configure the reception-condition configuration information for the terminal device, so that the terminal device can determine, according to the information, whether to receive the corresponding updated system broadcast message.

Based on the foregoing embodiments, it can be seen that an application of the solution is mainly the procedure illustrated in FIG. 2. Before receiving the updated system broadcast message or when receiving the updated system broadcast message, the terminal device firstly determines whether the terminal device satisfies the condition in the reception-condition configuration information. If configuration information or positioning information corresponding to the terminal device satisfies the reception condition in the reception-condition configuration information, the terminal device will receive the corresponding updated system broadcast message according to scheduling information of the corresponding system message; otherwise, the terminal device will skip receiving the current updated system broadcast message.

As can be seen, the implementation of the solution at least includes the following aspects.
I. The network device configures the reception-condition configuration information for the terminal device.
II. Precondition for applying the reception condition (optional).
III. The terminal device determines, according to the reception-condition configuration information, whether to receive the corresponding updated system broadcast message.

There is no limitation on the order between aspect I and aspect II in terms of information reception.

The implementation of the solution will be further described below with reference to several examples.
I. The network device configures the reception-condition configuration information for the terminal device.

This procedure involves the configuration granularity for the reception-condition configuration information and the contents of the reception-condition configuration information.

### (I) Configuration granularity:

The reception-condition configuration information is configured for the terminal device by the network device and used for determining reception of the updated system broadcast message. The reception-condition configuration information includes at least one of the logic ID configuration information, the bit field configuration information, or the geographic coordinate range configuration information.

In addition, the reception-condition configuration information is configured via a system broadcast message or dedicated signaling. The configuration granularity for the reception-condition configuration information is at least one of: the cell granularity, the SIB granularity, the SIB set granularity, the SI message granularity, or the SI set granularity.

Specifically, the case where the reception-condition configuration information is configured at the cell granularity is schematically shown in Table 1.

**Table 1: Reception-condition configuration information configured at cell granularity**

| | |
|---|---|
| Cell-level configuration | Cell initial bandwidth-related configuration |
| | Cell access control-related configuration |
| | Other cell-level configurations |
| | Reception-condition configuration |

As shown in Table 1, configurations such as the cell initial bandwidth-related configuration and the cell access control-related configuration are cell-level configurations. The reception-condition configuration is configured in parallel with the other cell-level configurations, and accordingly, the reception-condition configuration is the cell-level configuration. The "cell-level configuration" means that the reception-condition configuration is intended for all system broadcast messages of a cell, that is, with restriction of the reception-condition configuration information, a terminal device satisfying the reception condition needs to receive all the updated system broadcast messages; otherwise, a terminal device not satisfying the reception condition directly skips receiving the current updated system broadcast messages.

In this scheme, it should be understood that, although Table 1 schematically shows that the reception-condition configuration is the cell-level configuration, the disclosure does not exclude the case where it is specified in a protocol that some system broadcast message is not restricted by the cell-level reception-condition configuration. For example, it may be specified in a protocol that a system broadcast message other than MIB or SIB1 is restricted by the reception-condition configuration information configured by the network device.

The case where the configuration granularity for the reception-condition configuration information is the SIB granularity or the SI message granularity is schematically shown in Table 2.

**Table 2: Reception-condition configuration information configured at SIB granularity or SI message granularity**

| | |
|---|---|
| SIB*x* or SI message *x* | Reception-condition configuration *x* |
| SIB*y* or SI message *y* | Reception-condition configuration *y* |
| ...... | ...... |
| SIB*z* or SI message *z* | Reception-condition configuration *z* |

As shown in Table 2, each SIB or SI message is associated with one reception-condition configuration, and accordingly, the reception-condition configuration is an SIB granularity configuration or SI message granularity configuration. The "SIB granularity configuration or SI message granularity configuration" means that a specific reception-condition configuration is intended for one SIB or one SI message, that is, with restriction of corresponding reception-condition configuration information, a terminal device satisfying the reception condition receives a corresponding updated SIB or corresponding updated SI message; otherwise, a terminal device not satisfying the reception condition directly skips receiving the current corresponding updated SIB or current corresponding updated SI message.

In this scheme, it should be understood that, *x*/*y*/*z* in Table 2 is a positive integer greater than or equal to 1, which means a logic ID of an SIB. Table 2 only shows a schematic configuration, which does not mean that each system broadcast message needs to be associated with one reception-condition configuration. It may be specified in a protocol which SIB or SI message needs to be associated with one reception condition. For example, it is specified in a protocol that only SIB6/7/8 is associated with the reception condition, and in this case, reception of the remaining system broadcast messages updated is not restricted by the reception-condition configuration.

Table 2 only shows a schematic configuration, but the disclosure does not exclude the case where an MIB is also associated with one reception-condition configuration. During configuration, which message is associated with the reception-condition configuration may be determined according to actual needs, and the solution is not limited in this regard.

The case where the configuration granularity for the reception-condition configuration information is the SIB set granularity or the SI message set granularity is schematically shown in Table 3.

**Table 3: Reception-condition configuration information configured at SIB set granularity or SI message set granularity**

| | |
|---|---|
| SIB set 1 or SI message set 1 | Reception-condition configuration 1 |
| SIB set 2 or SI message set 2 | Reception-condition configuration 2 |
| ...... | ...... |
| SIB set *N* or SI message set *N* | Reception-condition configuration *N* |

As shown in Table 3, each SIB set or SI message set is associated with one reception-condition configuration, and accordingly, the reception-condition configuration is an SIB set granularity configuration or SI message set granularity configuration. The "SIB set granularity configuration or SI message set granularity configuration" means that a specific reception-condition configuration is intended for a set of SIBs or a set of SI messages, that is, with restriction of corresponding reception-condition configuration information, a terminal device satisfying the reception condition receives an updated SIB in a corresponding SIB set or receives an updated SI message in a corresponding SI set; otherwise, a terminal device not satisfying the reception condition directly skips receiving the current updated system broadcast message contained in the corresponding SIB set or the corresponding SI message set.

In this scheme, it should be understood that, *N* in Table 3 is a positive integer and *N*≥ 1. Table 3 only shows a schematic configuration, which does not mean that each system broadcast message needs to be associated with one reception-condition configuration. It may be specified in a protocol which SIB set or SI message set needs to be associated with one reception-condition configuration. For example, it is specified in a protocol that SIB 6/7/8 belongs to an SIB set and is associated with one reception-condition configuration, and in this case, reception of other system broadcast messages updated is not restricted by the reception-condition configuration.

Table 3 only shows a schematic configuration, but the disclosure does not exclude the case where an MIB also belongs to a specific SIB set or SI message set and is associated with one reception-condition configuration.

There is no limitation on the number (that is, quantity) and type of SIBs in an SIB set or the number and type of SI messages in an SI message set in the disclosure, and the configuration granularity and the mode of message combination are set according to actual needs.

The case where the configuration granularity for the reception-condition configuration information is a combination of the SIB granularity and the SIB set granularity is schematically shown in Table 4.

**Table 4: Reception-condition configuration information configured at a combination of SIB granularity and SIB set granularity**

| | |
|---|---|
| SIB set 1 | Reception-condition configuration 1 |
| SIB*x* | Reception-condition configuration 2 |
| ...... | ...... |
| SIB*n* | Reception-condition configuration *N* |

As shown in Table 4, SIB set 1 is associated with one reception-condition configuration, and SIB*x* to SIB*n* each are associated with one reception-condition configuration, and accordingly, the reception-condition configuration is a combination of an SIB set granularity configuration and an SIB set granularity configuration. That is, with restriction of corresponding reception-condition configuration information, a terminal device satisfying reception-condition configuration 1 receives a corresponding updated system broadcast message in SIB set 1, and a terminal device satisfying reception-condition configuration 2 receives a corresponding updated system broadcast message in SIB*x*; otherwise, a terminal device not satisfying the reception condition directly skips receiving the current corresponding updated system broadcast message in the SIB set and/or SIB*x*.

In this scheme, it should be understood that, *N* in Table 4 is a positive integer and *N*≥ 1. Table 4 only shows a schematic configuration, which does not mean that such combination of granularities can only involve one SIB set, and does not mean that such combination of granularities can only involve multiple SIBs. It may be specified in a protocol which SIB as well as SIB set needs to be associated with the reception-condition configuration, for example, it is specified in a protocol that SIB 6/7/8 belongs to an SIB set and is associated with one reception-condition configuration, and in this case, other system broadcast messages each are associated with a different reception-condition configuration.

There is no limitation on the number of SIB sets or the number and type of SIBs in this scheme, and the configuration granularity and the mode of message combination are set according to actual needs.

### (II) Contents of the configuration information:

The reception-condition configuration information in the technical solution of the disclosure includes at least one of the logic ID configuration information, the bit field configuration information, or the geographic coordinate range configuration information.

The logic ID configuration information includes at least one logic ID. The at least one logic ID is used for comparison with a logic ID of the terminal device, so as to determine whether the terminal device satisfies the reception condition.

The bit field configuration information has at least one bit. The at least one bit can be used for determining a value range in the reception condition, so as to determine whether the terminal device satisfies the reception condition.

The geographic coordinate range configuration information includes a geographic coordinate range. The geographic coordinate range is used for comparison with a geographic location of the terminal device, so as to determine whether the terminal device satisfies the reception condition.

Optionally, in an implementation, if the reception-condition configuration information includes the bit field configuration information, a mapping (i. e. mapping between bit-fields and logic IDs) will be further involved in a subsequent application. The terminal device may determine a bit field corresponding to the terminal device according to the mapping.

In the solution involved in the disclosure, the mapping between bit-fields and logic IDs may be pre-defined (for example, specified in a protocol or pre-configured), or may be configured by the network device via any one of a system broadcast message, dedicated signaling, or a NAS procedure, and the solution is not limited in this regard.

Table 5 below schematically shows that logic ID-related configuration information includes at least one logic ID.

**Table 5: Logic ID-related configuration information including at least one logic ID**

| | |
|---|---|
| Reception-condition configuration information | Logic ID 1 |
| | Logic ID 2 |
| | ...... |
| | Logic ID *N* |

If the logic ID-related configuration information includes the bit field configuration information, the mapping between bit-fields and logic IDs may be any one of: one bit-field corresponds to one logic ID; one bit-field corresponds to one logic ID set, where the logic ID set has at least two logic IDs; multiple bit-fields correspond to one logic ID; or multiple bit-fields correspond to one logic ID set, wherein the logic ID set has at least two logic IDs.

That is, the mapping may be one-to-one, one-to-multiple, multiple-to-one, or multiple-to-multiple, and the solution is not limited in this regard.

**Table 6: Logic ID-related configuration information including bit mapping configuration**

| | |
|---|---|
| Reception-condition configuration information | Bit 1 |
| | Bit 2 |
| | ...... |
| | Bit *N* |

As shown in Table 6, the reception-condition configuration information includes at least one bit, where *N* is a positive integer. The mapping between bit-fields and logic IDs is shown in Table 7 or Table 8.

**Table 7: Mapping 1 (one-to-one mapping or one-to-multiple mapping)**

| Mapping 1 | |
|---|---|
| Bit 1 | Logic ID set 1 |
| Bit 2 | Logic ID set 2 |
| ...... | ...... |
| Bit *N* | Logic ID set *N* |

As shown in Table 7, in mapping 1, one bit is associated with one logic ID set, and each logic ID set has at least one logic ID, that is, one bit may be mapped onto one or more logic IDs.

**Table 8: Mapping 2 (multiple-to-one mapping or multiple-to-multiple mapping)**

| First association 2 | |
|---|---|
| Bit 1 | Logic ID set 1 |
| Bit 2 | |
| Bit 3 | Logic ID set 2 |
| Bit 4 | |
| Bit 5 | |

As shown in Table 8, there are exemplarily five bits. In mapping 2, each set of bits is associated with one logic ID set, and each logic ID set has at least one logic ID, that is, multiple bits correspond to one or more logic IDs.

In Table 5, Table 7, or Table 8 above, the logic ID may be predefined, or may be obtained based on configuration information received from an access network, or may be obtained through a NAS procedure. If the logic ID is obtained from the access network, the configuration information is configured via a system broadcast message or dedicated signaling.

In terms of principles for defining the logic ID, at least one of the following factors may be taken into consideration: core-network local policy, access-network local policy, terminal-device capability, national regulation policy, or geographic region policy.

### II. Precondition for applying the reception condition (optional)

Optionally, before applying the reception-condition configuration information configured by the network device, the terminal device firstly needs to determine whether the terminal device is allowed to determine, based on the reception-condition configuration information configured by the network device, whether to receive the updated system broadcast information.

The terminal device may determine whether to receive the updated system broadcast message based on the reception-condition configuration information in various manners.

In an implementation, by default, if the reception-condition configuration information is configured, the terminal device may determine, based on the reception-condition configuration information, whether to receive the updated system broadcast message. If no reception-condition configuration information is configured, the terminal device will directly receive the corresponding updated system broadcast message. Such mode by default may be pre-configured or specified in a protocol.

In another implementation, before performing the reception-condition configuration information-based method, the network device may send indication information to the terminal device. The terminal device receives the indication information, where the indication information is used for indicating: whether the terminal device needs to determine based on the reception-condition configuration information whether to receive the corresponding updated system broadcast message.

The indication information may be sent via at least one of: dedicated signaling, a system broadcast message, NAS configuration, DCI, a MAC CE, a paging short message, or a paging message.

In another implementation, the terminal device may determine, according to the capability information of the terminal device, whether to determine based on the reception-condition configuration information whether to receive the corresponding updated system broadcast message. The capability information may be pre-configured or specified in a protocol, and the solution is not limited in this regard.

III. The terminal device determines, according to the reception-condition configuration information, whether to receive the corresponding updated system broadcast message.

This procedure includes various cases, and specifically depends on the contents carried in the reception-condition configuration information. Specifically, the reception-condition configuration information may include at least one of the logic ID configuration information, the bit field configuration information, or the geographic coordinate range configuration information. The behavior of the terminal device will be described in detail below respectively in connection with the case where the reception-condition configuration information includes the logic ID configuration information, the case where the reception-condition configuration information includes the bit field configuration information, and the case where the reception-condition configuration information includes the geographic coordinate range configuration information.

Scheme 1: The reception-condition configuration information includes the logical ID configuration information, and accordingly, whether the terminal device satisfies the condition in the reception-condition configuration information may be determined in S101 of embodiment I specifically as follows. Obtain a logic ID of the terminal device. If the logic ID in the logic ID configuration information includes the logic ID of the terminal device, determine that the terminal device satisfies the condition in the reception-condition configuration information. If the logic ID in the logic ID configuration information does not include the logic ID of the terminal device, determine that the terminal device does not meet the condition in the reception-condition configuration information.

In this scheme, for the case where the logic ID configuration information includes at least one logic ID, after the terminal device detects, according to a paging message or DCI sent by the network device, that a system broadcast message and/or warning information is updated, if the reception-condition configuration information is configured by the network device, the terminal device firstly needs to determine a logic ID associated with the terminal device. If the logic ID associated with the terminal device is included in the logic ID configuration information, the terminal device may receive an updated system broadcast message satisfying the reception condition according to scheduling information in SIB1; otherwise, if the logic ID associated with the terminal device is not included in the logic ID configuration information, the terminal device will skip a current updated system broadcast message not satisfying the reception condition, i. e. not receive the current corresponding updated system broadcast message. Here, the reception condition is that the logic ID associated with the terminal device is included in the logic ID configuration information.

If no reception-condition configuration information is configured by the network device, the terminal device will receive the updated system broadcast information in a default mode.

Scheme 2: The reception-condition configuration information includes the bit field configuration information, and accordingly, whether the terminal device satisfies the condition in the reception-condition configuration information may be determined in S 101 of embodiment I specifically as follows. Obtain a logic ID of the terminal device. Determine a bit field corresponding to the terminal device according to the logic ID of the terminal device and the mapping between bit-fields and logic IDs. If a value of the bit field corresponding to the terminal device falls within a predefined value range, determine that the terminal device satisfies the condition in the reception-condition configuration information. If the value of the bit field corresponding to the terminal device does not fall within the value range, determine that the terminal device does not meet the condition in the reception-condition configuration information.

In this scheme, the bit field configuration information has at least one bit. If determination on the reception condition is based on the bit field configuration information, the mapping between bit-fields and logic IDs is further involved. The mapping may be predefined, or may be configured by the network device via any one of a system broadcast message, dedicated signaling, or a NAS procedure. For details of the mapping, reference can be made to the elaboration in the foregoing embodiment.

In this scheme, after detecting, based on a paging message or DCI sent by the network device, that a system broadcast message and/or warning information is updated, if the reception-condition configuration information is configured by the network device, the terminal device needs to firstly determine the logic ID associated with the terminal device, and then determine the bit field corresponding to the terminal device according to the logic ID associated with the terminal device and the mapping described above.

If the value of the bit field corresponding to the terminal device falls within the predefined value range, the terminal device will receive an updated system broadcast message satisfying the reception condition according to scheduling information in SIB1; otherwise, if the value of the bit field corresponding to the terminal device does not fall within the predefined value range, the terminal device will skip a current updated system broadcast message not satisfying the reception condition, i. e. not receive the current updated system broadcast message. Here, the reception condition is that the value of the bit field corresponding to the terminal device falls within the predefined value range. In an implementation of this scheme, the value range may also be determined according to the at least one bit in the bit field configuration information.

Optionally, in another implementation, if it is determined, according to the logic ID of the terminal device and the mapping between bit-fields and logic IDs, that the terminal device does not have a corresponding bit field, that is, a bit field corresponding to the logic ID of the terminal device does not exist in the mapping (i. e. there is no corresponding bit field), the terminal device will consider that the condition in the reception-condition configuration information is not satisfied, that is, skip the current corresponding updated system broadcast message and not receive the current corresponding updated system broadcast message.

If no reception-condition configuration information is configured by the network device, the terminal device will receive the updated system broadcast information in a default mode.

Scheme 3: The reception-condition configuration information includes the geographic coordinate range configuration information, and accordingly, whether the terminal device satisfies the condition in the reception-condition configuration information may be determined in S 101 of embodiment I specifically as follows. Obtain geographic location coordinates of the terminal device. If the geographic location coordinates of the terminal device fall within a geographic coordinate range in the geographic coordinate range configuration information, determine that the terminal device satisfies the condition in the reception-condition configuration information. If the geographic location coordinates of the terminal device do not fall within the geographic coordinate range in the geographic coordinate range configuration information, determine that the terminal device does not satisfy the condition in the reception-condition configuration information.

In this scheme, if the reception-condition configuration information includes the geographic coordinate range configuration information, after detecting, according to a paging message or DCI sent by the network device, that a system broadcast message and/or warning information is updated, the terminal device will perform the following operations.

If the reception-condition configuration information is configured by the network device, the terminal device firstly needs to determine a geographic location of the terminal device and obtain the geographic location coordinates. If the geographic location coordinates of the terminal device fall within the range in the geographic coordinate range configuration information, the terminal device will receive an updated system broadcast message satisfying the reception condition according to scheduling information in SIB1; otherwise, if the geographic location coordinates of the terminal device do not fall within the range in the geographic coordinate range configuration information, the terminal device will skip a current updated system broadcast messages not satisfying the reception condition, i. e. not receive the current updated system broadcast message. Here, the reception condition is that the current geographic location (or geographic location coordinates) of the terminal device falls within the geographic coordinate range defined in the reception-condition configuration information.

If no reception-condition configuration information is configured by the network device, the terminal device will receive the updated system information in a default mode.

The meaning of the default mode in scheme 1~scheme 3 above is as follows.

If the terminal device detects, according to a paging message or DCI sent by the network device, that a system broadcast message and/or warning information is updated, the terminal device will determine, according to configuration information in SIB1, which SIB is updated, and receive the updated system broadcast message in a next system-information modification window according to scheduling configuration information in SIB 1.

If the terminal device detects that warning information is updated, the terminal device will directly receive the updated warning information in a current system-information modification window according to the scheduling configuration information in SIB1.

In the above schemes, after the terminal device detects that the system broadcast message is updated, determination (that is, determining whether the condition in the reception-condition configuration information is satisfied) is performed exemplarily before receiving the updated system broadcast message. In another scheme, determination on the reception-condition configuration information is performed after the terminal device receives a portion of the updated system broadcast message. If the terminal device determines that the terminal device satisfies the condition in the reception-condition configuration information, the terminal device will complete receiving the remaining portion of the updated system broadcast message; otherwise, if the terminal device determines that the terminal device does not satisfy the condition in the reception-condition configuration information, the terminal device will drop receiving the remaining portion of the corresponding updated system broadcast message.

Besides the three implementations in scheme 1~scheme 3 above, the reception-condition configuration information may also include two or more of the logic ID configuration information, the bit field configuration information, or the geographic coordinate range configuration information. In this case, if the terminal device detects that the system broadcast information is updated or if a portion of the updated system broadcast message is received, the terminal device needs to determine whether the terminal device satisfies reception conditions corresponding to two or more types of configuration information. Only if all the reception conditions are satisfied will the terminal device determine to receive the updated system broadcast message satisfying the reception conditions according to scheduling information in SIB1; otherwise, the terminal device will drop receiving the updated system broadcast message.

As can be seen, the general idea of the method provided in the embodiments of the disclosure is as follows: before receiving the updated system broadcast message according to scheduling information in SIB 1 or when receiving the updated system broadcast message according to scheduling information in SIB 1, the terminal device determines whether the updated system broadcast message needs to be received; if the terminal device determines that the corresponding updated system broadcast message is relevant to the terminal device, the terminal device will continue receiving the updated system broadcast message; otherwise, if the terminal device determines that the corresponding updated system broadcast message is not relevant to the terminal device, the terminal device will terminate receiving the corresponding updated system broadcast message, that is, drop receiving the updated system broadcast message or drop receiving the remaining portion of the updated system broadcast message. With the method, the terminal device can receive conditionally the updated system broadcast message, and the condition can be configured by the network device, which is possible to avoid receiving a large amount of unnecessary information, and on the other hand, reduce power consumption of the terminal device to some extent, thereby improving user experience.

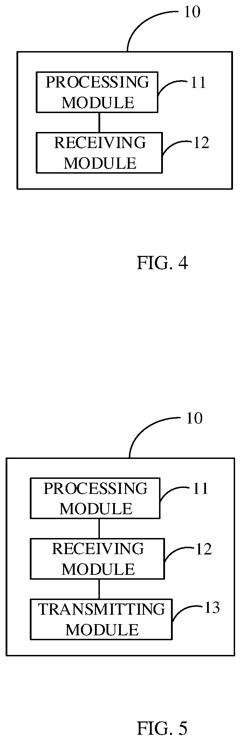

FIG. 4 is a schematic structural diagram illustrating embodiment I of an apparatus for system broadcast message update provided in the disclosure. As illustrated in FIG. 4, the apparatus 10 for system broadcast message update includes a processing module 11 and a receiving module 12. The processing module 11 is configured to determine whether the apparatus satisfies a condition in reception-condition configuration information, where the reception-condition configuration information is pre-configured information used for the apparatus to determine whether to receive a corresponding updated system broadcast message. The receiving module 12 is configured to receive the corresponding updated system broadcast message if the apparatus determines that the apparatus satisfies the condition in the reception-condition configuration information.

Optionally, the processing module 11 is further configured to drop receiving the corresponding updated system broadcast message or drop receiving a remaining portion of the corresponding updated system broadcast message, if the apparatus determines that the apparatus does not satisfy the condition in the reception-condition configuration information.

The apparatus provided in this embodiment is configured to implement the technical solution of a terminal-device side in the foregoing method embodiments, and the implementation principles and technical effects thereof are similar to those of the method embodiments. If a terminal device detects that a system broadcast message is updated or if the terminal device receives a portion of the updated broadcast message, the terminal device will determine, according to the reception-condition configuration information, whether the terminal device satisfies the condition in the reception-condition configuration information. If the condition is satisfied, the terminal device will receive the corresponding updated system broadcast message or receive the remaining portion of the corresponding updated system broadcast message. If the condition is not satisfied, the terminal device will drop receiving the corresponding updated system broadcast message or drop receiving the remaining portion of the corresponding updated system broadcast message, which can avoid unnecessary reception of the updated system broadcast message by all the terminal devices, thereby improving user experience and on the other hand, reducing power consumption of the terminal device that does not need to receive the broadcast message.

On the basis of the foregoing implementation, the reception-condition configuration information includes at least one of: logic ID configuration information, where the logic ID configuration information includes at least one logic ID; bit field configuration information, where the bit field configuration information has at least one bit; or geographic coordinate range configuration information.

Optionally, a configuration granularity for the reception-condition configuration information is at least one of: a cell granularity, an SIB granularity, an SIB set granularity, an SI granularity, or an SI set granularity.

Optionally, the reception-condition configuration information is configured via a system broadcast message or dedicated signaling.

Optionally, the processing module 11 is specifically configured to determine whether the apparatus satisfies the condition in the reception-condition configuration information, when the apparatus detects, according to DCI or a paging message sent by a network device, that a system broadcast message and/or warning information is updated.

FIG. 5 is a schematic structural diagram illustrating embodiment II of an apparatus for system broadcast message update provided in the disclosure. As illustrated in FIG. 5, the apparatus 10 for system broadcast message update further includes a receiving module 13. The receiving module 13 is configured to receive a portion of an updated system broadcast message. The processing module 11 is specifically configured to determine, according to the received portion of the system broadcast message, whether the apparatus satisfies the condition in the reception-condition configuration information.

Optionally, the reception-condition configuration information includes the logic ID configuration information, and accordingly, the processing module 11 is specifically configured to: obtain a logic ID of a terminal device; determine that the apparatus satisfies the condition in the reception-condition configuration information, if the logic ID in the logic ID configuration information comprises the logic ID of the apparatus; and determine that the apparatus does not meet the condition in the reception-condition configuration information, if the logic ID in the logic ID configuration information does not comprise the logic ID of the apparatus.

Optionally, the reception-condition configuration information includes the bit field configuration information, and accordingly, the processing module 11 is specifically configured to: obtain a logic ID of the apparatus; determine a bit field corresponding to the apparatus according to the logic ID of the apparatus and a mapping between bit-fields and logic IDs; determine that the apparatus satisfies the condition in the reception-condition configuration information, if a value of the bit field corresponding to the apparatus falls within a predefined value range; and determine that the apparatus does not meet the condition in the reception-condition configuration information, if the value of the bit field corresponding to the apparatus does not fall within the value range.

In addition, the processing module 11 is further configured to determine that the apparatus does not satisfy the condition in the reception-condition configuration information, if determining, according to the logic ID of the apparatus and the mapping between bit-fields and logic IDs, that the apparatus does not have a corresponding bit field.

Optionally, the mapping between bit-fields and logic IDs is predefined; or the mapping between bit-fields and logic IDs is configured via any one of a system broadcast message, dedicated signaling, or a NAS procedure.

Optionally, the mapping between bit-fields and logic IDs includes any one of: one bit-field corresponds to one logic ID; one bit-field corresponds to one logic ID set, where the logic ID set has at least two logic IDs; multiple bit-fields correspond to one logic ID; or multiple bit-fields correspond to one logic ID set, wherein the logic ID set has at least two logic IDs.

Optionally, the reception-condition configuration information includes the geographic coordinate range configuration information, and accordingly, the processing module 11 is specifically configured to: obtain geographic location coordinates of the apparatus; determine that the apparatus satisfies the condition in the reception-condition configuration information, if the geographic location coordinates of the apparatus fall within a geographic coordinate range in the geographic coordinate range configuration information; and determine that the apparatus does not satisfy the condition in the reception-condition configuration information, if the geographic location coordinates of the apparatus do not fall within the geographic coordinate range in the geographic coordinate range configuration information.

Optionally, the processing module 11 is further configured to determine whether to receive the updated system broadcast message based on the reception-condition configuration information.

Optionally, the processing module 11 is specifically configured to determine, according to indication information sent by the network device, whether to receive the updated system broadcast message based on the reception-condition configuration information, where the indication information is indicative of whether to receive the updated system broadcast message based on the reception-condition configuration information.

Optionally, the indication information is sent via at least one of: dedicated signaling, a system broadcast message, NAS configuration, DCI, a MAC CE, a paging short message, or a paging message.

Optionally, the processing module 11 is specifically configured to determine, according to capability information of the apparatus, whether to receive the updated system broadcast message based on the reception-condition configuration information, where the capability information is indicative of whether the apparatus supports receiving the updated system broadcast message based on the reception-condition configuration information.

Optionally, the receiving module 13 is specifically configured to receive updated warning information, where the broadcast message contains the warning information.

The apparatus provided in the foregoing embodiment is configured to implement the technical solution of the terminal-device side in the foregoing method embodiments, and the implementation principles and technical effects thereof are similar to those of the method embodiments and thus will not be described in detail again herein.

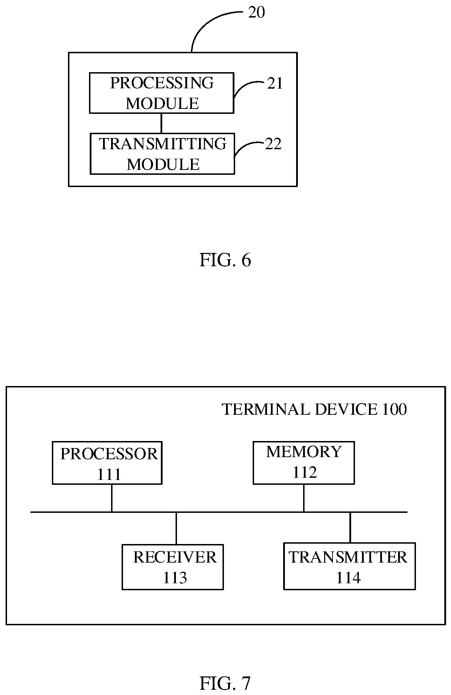

FIG. 6 is a structural schematic diagram illustrating embodiment III of an apparatus for system broadcast message update provided in the disclosure. As illustrated in FIG. 6, the apparatus 20 for system broadcast message update includes a processing module 21 and a transmitting module 22. The processing module 21 is configured to obtain reception-condition configuration information. The transmitting module 22 is configured to send the reception-condition configuration information to a terminal device via a system broadcast message or dedicated signaling, where the reception-condition configuration information is used for the terminal device to determine whether to receive an updated system broadcast message.

Optionally, the reception-condition configuration information includes at least one of: logic ID configuration information, where the logic ID configuration information includes at least one logic ID; bit field configuration information, where the bit field configuration information has at least one bit; or geographic coordinate range configuration information.

Optionally, a configuration granularity for the reception-condition configuration information is at least one of: a cell granularity, an SIB granularity, an SIB set granularity, an SI granularity, or an SI set granularity.

Optionally, the transmitting module 22 is further configured to send a mapping between bit-fields and logic IDs to the terminal device via any one of a system broadcast message, dedicated signaling, or a NAS procedure.

Optionally, the mapping between bit-fields and logic IDs includes any one of: one bit-field corresponds to one logic ID; one bit-field corresponds to one logic ID set, where the logic ID set has at least two logic IDs; multiple bit-fields correspond to one logic ID; or multiple bit-fields correspond to one logic ID set, wherein the logic ID set has at least two logic IDs.

Optionally, the transmitting module 22 is further configured to send indication information to the terminal device, where the indication information is indicative of whether the terminal device is to receive the updated system broadcast message based on the reception-condition configuration information.

Optionally, the indication information is sent via at least one of: dedicated signaling, a system broadcast message, NAS configuration, DCI, a MAC CE, a paging short message, or a paging message.

The apparatus provided in the foregoing embodiment is configured to implement the technical solution of a network-device side in the foregoing method embodiments, and the implementation principles and technical effects thereof are similar to those of the method embodiments and thus will not be described in detail again herein.

FIG. 7 is a schematic structural diagram of a terminal device provided in the disclosure. As illustrated in FIG. 7, the terminal device 100 includes a processor 111, a memory 112, a receiver 113, and a transmitter 114. The memory 112 is configured to store computer-executable instructions. The processor 111 is configured to execute the computer-executable instructions stored in the memory 112, to implement the technical solutions of a terminal-device side in the foregoing method embodiments.

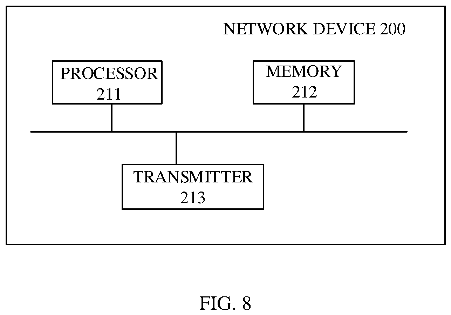

FIG. 8 is a schematic structural diagram of a network device provided in the disclosure. As illustrated in FIG. 8, the network device 200 includes a processor 211, a memory 212, and a receiver 213. The memory 212 is configured to store computer-executable instructions. The processor 211 is configured to execute the computer-executable instructions stored in the memory 212, to implement the technical solutions of a network-device side in the foregoing method embodiments.

In the foregoing embodiments, the terminal device or the network device is of a simple design. There is no limitation the number of processors and memories in a device in the embodiments of the disclosure. In the foregoing embodiments, the number is exemplarily 1.

In an implementation of the terminal device or the network device above, the memory, the processor, and the receiver may be connected with each other via a bus, or may be connected with each other in other manners. Optionally, the memory may be integrated into the processor.

In addition, the terminal device or the network device provided in embodiments of the disclosure further includes other devices such as a communication interface, and the solution is not limited in this regard.

Embodiments of the disclosure further provide a computer-readable storage medium. The computer-readable storage medium is configured to store computer-executable instructions which, when executed by a processor, are operable with the processor to implement the technical solution of the terminal device in any one of the foregoing method embodiments.

Embodiments of the disclosure further provide a computer-readable storage medium. The computer-readable storage medium is configured to store computer-executable instructions which, when executed by a processor, are operable with the processor to implement the technical solution of a network-device side in any one of the foregoing method embodiments.

Optionally, the processor may be a chip.

Embodiments of the disclosure further provide a chip. The chip includes a processing module and a communication interface. The processing module is configured to implement the solution of the terminal device in any one of the foregoing method embodiments.

Embodiments of the disclosure further provide a chip. The chip includes a processing module and a communication interface. The processing module is configured to implement the solution of the network device in any one of the foregoing method embodiments.

In addition, any one of the foregoing chips further includes a storage module (e. g. a memory). The storage module is configured to store instructions. The processing module is configured to execute the instructions stored in the storage module, to implement the technical solution in any one of the foregoing method embodiments.

Embodiments of the disclosure further provide a program which, when executed by a processor, is operable with the processor to implement the solution of the terminal device or the network device in any one of the foregoing method embodiments.

Embodiments of the disclosure further provide a computer program product. The computer program product includes computer programs which, when executed by a processor, are operable with the processor to implement the technical solution of a terminal-device side.

Embodiments of the disclosure further provide a computer program product. The computer program product includes computer programs which, when executed by a processor, are operable with the processor to implement the technical solution of a network-device side.

It will be appreciated that the devices and methods disclosed in implementations of the disclosure may also be implemented in various other manners. For example, the above device implementations are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

In an implementation of any foregoing device, it should be understood that, the processor may be a central processing unit (CPU), or may be other general-purpose processors, a digital signal processor (DSP), an application specific integrated circuit (ASIC), and the like. The general-purpose processor may be a microprocessor, or the processor may also be any conventional processor. The steps of the methods disclosed in the disclosure may be directly implemented by a hardware processor or implemented by a combination of hardware and software modules of the processor.

All or some of the steps in the foregoing method embodiments may be implemented by a program instructing relevant hardware. The foregoing program may be stored in a readable memory. The program, when executed, is operable to perform the steps of the foregoing method embodiments. The memory (storage medium) includes one or more of a read-only memory (ROM), a random access memory (RAM), a flash memory, a hard disk, a solid-state drive, a magnetic tape, a floppy disk, or an optical disc.

## Claims

1. A method for system broadcast message update, applied to a terminal device and comprising:
determining whether the terminal device satisfies a condition in reception-condition configuration information, wherein the reception-condition configuration information is pre-configured information used for the terminal device to determine whether to receive a corresponding updated system broadcast message; and
receiving the corresponding updated system broadcast message when the terminal device determines that the terminal device satisfies the condition in the reception-condition configuration information.

2. The method of claim 1, further comprising:
dropping receiving the corresponding updated system broadcast message or dropping receiving a remaining portion of the corresponding updated system broadcast message, when the terminal device determines that the terminal device does not satisfy the condition in the reception-condition configuration information.

3. The method of claim 1 or 2, wherein the reception-condition configuration information comprises at least one of:
logic identity (ID) configuration information, wherein the logic ID configuration information comprises at least one logic ID;
bit field configuration information, wherein the bit field configuration information has at least one bit; or
geographic coordinate range configuration information.

4. The method of any of claims 1 to 3, wherein a configuration granularity for the reception-condition configuration information is at least one of:
a cell granularity, a system information block (SIB) granularity, an SIB set granularity, a system information (SI) granularity, or an SI set granularity.

5. The method of any of claims 1 to 4, wherein the reception-condition configuration information is configured via a system broadcast message or dedicated signaling.

6. The method of any of claims 1 to 5, wherein determining whether the terminal device satisfies the condition in the reception-condition configuration information comprises:
determining whether the terminal device satisfies the condition in the reception-condition configuration information, when the terminal device detects, according to downlink control information (DCI) or a paging message sent by a network device, that a system broadcast message and/or warning information is updated.

7. The method of any of claims 1 to 5, wherein determining whether the terminal device satisfies the condition in the reception-condition configuration information comprises:
receiving a portion of an updated system broadcast message; and
determining, according to the received portion of the system broadcast message, whether the terminal device satisfies the condition in the reception-condition configuration information.

8. The method of claim 3, wherein the reception-condition configuration information comprises the logic ID configuration information, and accordingly, determining whether the terminal device satisfies the condition in the reception-condition configuration information comprises:
obtaining a logic ID of the terminal device;
determining that the terminal device satisfies the condition in the reception-condition configuration information, when the logic ID in the logic ID configuration information comprises the logic ID of the terminal device; and
determining that the terminal device does not meet the condition in the reception-condition configuration information, when the logic ID in the logic ID configuration information does not comprise the logic ID of the terminal device.

9. The method of claim 3, wherein the reception-condition configuration information comprises the bit field configuration information, and accordingly, determining whether the terminal device satisfies the condition in the reception-condition configuration information comprises:
obtaining a logic ID of the terminal device;
determining a bit field corresponding to the terminal device according to the logic ID of the terminal device and a mapping between bit-fields and logic IDs;
determining that the terminal device satisfies the condition in the reception-condition configuration information, when a value of the bit field corresponding to the terminal device falls within a predefined value range; and
determining that the terminal device does not meet the condition in the reception-condition configuration information, when the value of the bit field corresponding to the terminal device does not fall within the value range.

10. The method of claim 9, further comprising:
determining that the terminal device does not satisfy the condition in the reception-condition configuration information, when determining, according to the logic ID of the terminal device and the mapping between bit-fields and logic IDs, that the terminal device does not have a corresponding bit field.

11. The method of claim 9 or 10, wherein
the mapping between bit-fields and logic IDs is predefined; or
the mapping between bit-fields and logic IDs is configured via any one of a system broadcast message, dedicated signaling, or a non-access stratum (NAS) procedure.

12. The method of any of claims 9 to 11, wherein the mapping between bit-fields and logic IDs comprises any one of:
one bit-field corresponds to one logic ID;
one bit-field corresponds to one logic ID set, where the logic ID set has at least two logic IDs;
a plurality of bit-fields corresponds to one logic ID; or
a plurality of bit-fields corresponds to one logic ID set, wherein the logic ID set has at least two logic IDs.

13. The method of claim 3, wherein the reception-condition configuration information comprises the geographic coordinate range configuration information, and accordingly, determining whether the terminal device satisfies the condition in the reception-condition configuration information comprises:
obtaining geographic location coordinates of the terminal device;
determining that the terminal device satisfies the condition in the reception-condition configuration information, when the geographic location coordinates of the terminal device fall within a geographic coordinate range in the geographic coordinate range configuration information; and
determining that the terminal device does not satisfy the condition in the reception-condition configuration information, when the geographic location coordinates of the terminal device do not fall within the geographic coordinate range in the geographic coordinate range configuration information.

14. The method of any of claims 1 to 13, wherein before determining whether the terminal device satisfies the condition in the reception-condition configuration information, the method further comprises:
determining whether to receive the updated system broadcast message based on the reception-condition configuration information.

15. The method of claim 14, wherein determining whether to receive the updated system broadcast message based on the reception-condition configuration information comprises:
determining, according to indication information sent by the network device, whether to receive the updated system broadcast message based on the reception-condition configuration information, wherein the indication information is indicative of whether to receive the updated system broadcast message based on the reception-condition configuration information.

16. The method of claim 15, wherein the indication information is sent via at least one of: dedicated signaling, a system broadcast message, NAS configuration, DCI, a media access control-control element (MAC CE), a paging short message, or a paging message.

17. The method of claim 14, wherein determining whether to receive the updated system broadcast message based on the reception-condition configuration information comprises:
determining, according to capability information of the terminal device, whether to receive the updated system broadcast message based on the reception-condition configuration information, wherein the capability information is indicative of whether the terminal device supports receiving the updated system broadcast message based on the reception-condition configuration information.

18. The method of any of claims 1 to 17, wherein receiving the updated system broadcast message comprises:
receiving updated warning information, wherein the system broadcast message contains the warning information.

19. A method for system broadcast message update, applied to a network device and comprising:
sending reception-condition configuration information to a terminal device via a system broadcast message or dedicated signaling, wherein the reception-condition configuration information is used for the terminal device to determine whether to receive an updated system broadcast message.

20. The method of claim 19, wherein the reception-condition configuration information comprises at least one of:
logic identity (ID) configuration information, wherein the logic ID configuration information comprises at least one logic ID;
bit field configuration information, wherein the bit field configuration information has at least one bit; or
geographic coordinate range configuration information.

21. The method of claim 19 or 20, wherein a configuration granularity for the reception-condition configuration information is at least one of:
a cell granularity, a system information block (SIB) granularity, an SIB set granularity, a system information (SI) granularity, or an SI set granularity.

22. The method of any of claims 19 to 21, further comprising:
sending a mapping between bit-fields and logic IDs to the terminal device via any one of a system broadcast message, dedicated signaling, or a non-access stratum (NAS) procedure.

23. The method of claim 22, wherein the mapping between bit-fields and logic IDs comprises any one of:
one bit-field corresponds to one logic ID;
one bit-field corresponds to one logic ID set, where the logic ID set has at least two logic IDs;
a plurality of bit-fields corresponds to one logic ID; or
a plurality of bit-fields corresponds to one logic ID set, wherein the logic ID set has at least two logic IDs.

24. The method of any of claims 19 to 23, further comprising:
sending indication information to the terminal device, wherein the indication information is indicative of whether the terminal device is to receive the updated system broadcast message based on the reception-condition configuration information.

25. The method of claim 24, wherein the indication information is sent via at least one of: dedicated signaling, a system broadcast message, NAS configuration, downlink control information (DCI), a media access control-control element (MAC CE), a paging short message, or a paging message.

26. An apparatus for system broadcast message update, comprising:
a processing module configured to determine whether the apparatus satisfies a condition in reception-condition configuration information, wherein the reception-condition configuration information is pre-configured information used for the apparatus to determine whether to receive a corresponding updated system broadcast message; and
a receiving module configured to receive the corresponding updated system broadcast message when the apparatus determines that the apparatus satisfies the condition in the reception-condition configuration information.

27. The apparatus of claim 26, wherein the processing module is further configured to:
drop receiving the corresponding updated system broadcast message or drop receiving a remaining portion of the corresponding updated system broadcast message, when the apparatus determines that the apparatus does not satisfy the condition in the reception-condition configuration information.

28. The apparatus of claim 26 or 27, wherein the reception-condition configuration information comprises at least one of:
logic identity (ID) configuration information, wherein the logic ID configuration information comprises at least one logic ID;
bit field configuration information, wherein the bit field configuration information has at least one bit; or
geographic coordinate range configuration information.

29. The apparatus of any of claims 26 to 28, wherein a configuration granularity for the reception-condition configuration information is at least one of:
a cell granularity, a system information block (SIB) granularity, an SIB set granularity, a system information (SI) granularity, or an SI set granularity.

30. The apparatus of any of claims 26 to 29, wherein the reception-condition configuration information is configured via a system broadcast message or dedicated signaling.

31. The apparatus of any of claims 26 to 30, wherein the processing module is specifically configured to:
determine whether the apparatus satisfies the condition in the reception-condition configuration information, when the apparatus detects, according to downlink control information (DCI) or a paging message sent by a network device, that a system broadcast message and/or warning information is updated.

32. The apparatus of any of claims 26 to 30, wherein
the apparatus further comprises:
a receiving module configured to receive a portion of an updated system broadcast message; and
the processing module is specifically configured to:
determine, according to the received portion of the system broadcast message, whether the apparatus satisfies the condition in the reception-condition configuration information.

33. The apparatus of claim 28, wherein the reception-condition configuration information comprises the logic ID configuration information, and accordingly, the processing module is specifically configured to:
obtain a logic ID of a terminal device;
determine that the apparatus satisfies the condition in the reception-condition configuration information, when the logic ID in the logic ID configuration information comprises the logic ID of the apparatus; and
determine that the apparatus does not meet the condition in the reception-condition configuration information, when the logic ID in the logic ID configuration information does not comprise the logic ID of the apparatus.

34. The apparatus of claim 28, wherein the reception-condition configuration information comprises the bit field configuration information, and accordingly, the processing module is specifically configured to:
obtain a logic ID of the apparatus;
determine a bit field corresponding to the apparatus according to the logic ID of the apparatus and a mapping between bit-fields and logic IDs;
determine that the apparatus satisfies the condition in the reception-condition configuration information, when a value of the bit field corresponding to the apparatus falls within a predefined value range; and
determine that the apparatus does not meet the condition in the reception-condition configuration information, when the value of the bit field corresponding to the apparatus does not fall within the value range.

35. The apparatus of claim 34, wherein the processing module is further configured to:
determine that the apparatus does not satisfy the condition in the reception-condition configuration information, when determining, according to the logic ID of the apparatus and the mapping between bit-fields and logic IDs, that the apparatus does not have a corresponding bit field.

36. The apparatus of claim 34 or 35, wherein
the mapping between bit-fields and logic IDs is predefined; or
the mapping between bit-fields and logic IDs is configured via any one of a system broadcast message, dedicated signaling, or a non-access stratum (NAS) procedure.

37. The apparatus of any of claims 34 to 36, wherein the mapping between bit-fields and logic IDs comprises any one of:
one bit-field corresponds to one logic ID;
one bit-field corresponds to one logic ID set, where the logic ID set has at least two logic IDs;
a plurality of bit-fields correspond to one logic ID; or
a plurality of bit-fields correspond to one logic ID set, wherein the logic ID set has at least two logic IDs.

38. The apparatus of claim 28, wherein the reception-condition configuration information comprises the geographic coordinate range configuration information, and accordingly, the processing module is specifically configured to:
obtain geographic location coordinates of the apparatus;
determine that the apparatus satisfies the condition in the reception-condition configuration information, when the geographic location coordinates of the apparatus fall within a geographic coordinate range in the geographic coordinate range configuration information; and
determine that the apparatus does not satisfy the condition in the reception-condition configuration information, when the geographic location coordinates of the apparatus do not fall within the geographic coordinate range in the geographic coordinate range configuration information.

39. The apparatus of any of claims 26 to 38, wherein the processing module is further configured to:
determine whether to receive the updated system broadcast message based on the reception-condition configuration information.

40. The apparatus of claim 39, wherein the processing module is specifically configured to:
determine, according to indication information sent by the network device, whether to receive the updated system broadcast message based on the reception-condition configuration information, wherein the indication information is indicative of whether to receive the updated system broadcast message based on the reception-condition configuration information.

41. The apparatus of claim 40, wherein the indication information is sent via at least one of: dedicated signaling, a system broadcast message, NAS configuration, DCI, a media access control-control element (MAC CE), a paging short message, or a paging message.

42. The apparatus of claim 39, wherein the processing module is specifically configured to:
determine, according to capability information of the apparatus, whether to receive the updated system broadcast message based on the reception-condition configuration information, wherein the capability information is indicative of whether the apparatus supports receiving the updated system broadcast message based on the reception-condition configuration information.

43. The apparatus of any of claims 26 to 42, wherein the receiving module is specifically configured to:
receive updated warning information, wherein the broadcast message contains the warning information.

44. An apparatus for system broadcast message update, comprising:
a transmitting module configured to send reception-condition configuration information to a terminal device via a system broadcast message or dedicated signaling, wherein the reception-condition configuration information is used for the terminal device to determine whether to receive an updated system broadcast message.

45. The apparatus of claim 44, wherein the reception-condition configuration information comprises at least of:
logic identity (ID) configuration information, wherein the logic ID configuration information comprises at least one logic ID;
bit field configuration information, wherein the bit field configuration information has at least one bit; or
geographic coordinate range configuration information.

46. The apparatus of claim 44 or 45, wherein a configuration granularity for the reception-condition configuration information is at least one of:
a cell granularity, a system information block (SIB) granularity, an SIB set granularity, a system information (SI) granularity, or an SI set granularity.

47. The apparatus of any of claims 44 to 46, wherein the transmitting module is further configured to:
send a mapping between bit-fields and logic IDs to the terminal device via any one of a system broadcast message, dedicated signaling, or a non-access stratum (NAS) procedure.

48. The apparatus of claim 47, wherein the mapping between bit-fields and logic IDs comprises any one of:
one bit-field corresponds to one logic ID;
one bit-field corresponds to one logic ID set, where the logic ID set has at least two logic IDs;
a plurality of bit-fields corresponds to one logic ID; or
a plurality of bit-fields corresponds to one logic ID set, wherein the logic ID set has at least two logic IDs.

49. The apparatus of any of claims 44 to 48, wherein the transmitting module is further configured to:
send indication information to the terminal device, wherein the indication information is indicative of whether the terminal device is to receive the updated system broadcast message based on the reception-condition configuration information.

50. The apparatus of claim 49, wherein the indication information is sent via at least one of: dedicated signaling, a system broadcast message, NAS configuration, downlink control information (DCI), a media access control-control element (MAC CE), a paging short message, or a paging message.

51. A terminal device, comprising:
a receiver;
a transmitter;
a memory configured to store computer-executable instructions; and
a processor configured to execute the computer-executable instructions stored in the memory, to implement the method of any of claims 1 to 18.

52. A network device, comprising:
a transmitter;
a memory configured to store computer-executable instructions; and
a processor configured to execute the computer-executable instructions stored in the memory, to implement the method of any of claims 19 to 25.

53. A computer-readable storage medium configured to store computer-executable instructions which, when executed by a processor, are operable with the processor to implement the method of any of claims 1 to 18.

54. A computer-readable storage medium configured to store computer-executable instructions which, when executed by a processor, are operable with the processor to implement the method of any of claims 19 to 25.

55. A chip, comprising:
a communication interface; and
a processing module configured to implement the method of any of claims 1 to 18.

56. A chip, comprising:
a communication interface; and
a processing module configured to implement the method of any of claims 19 to 25.

57. A computer program product comprising computer programs which, when executed by a processor, are operable with the processor to implement the method of any of claims 1 to 18.

58. A computer program product comprising computer programs which, when executed by a processor, are operable with the processor to implement the method of any of claims 19 to 25.
